# EUROPEAN PATENT APPLICATION

(11) **EP 2 728 176 A1**
(43) Date of publication of application: **07.05.2014**
(21) Application number: 12804125.8
(22) Date of filing: 26.06.2012
(51) Int. Cl.: F03D 7/04

(54) **MAINTENANCE DEVICE FOR WIND POWER GENERATOR AND MAINTENANCE METHOD FOR WIND POWER GENERATOR**

(30) Priority: 29.06.2011 JP 2011144475
(71) Applicant: Mitsubishi Heavy Industries, Ltd., Tokyo 108-8215 (JP)
(72) Inventor: NAKAMURA Shigeaki, Tokyo 108-8215 (JP); BABA Mitsuya, Tokyo 108-8215 (JP)
(74) Representative: Intès, Didier Gérard André
(86) International application number: PCT/JP2012/066213
(87) International publication number: WO 2013/002194

(57) **Abstract**

A wind turbine generator maintenance apparatus includes: an operation control section controlling a wind turbine generator by referring to control parameters used in correlating wind speeds with power outputs so that, when a wind blows at a predetermined wind speed, a predetermined power output corresponding to the predetermined wind speed out of said power output is generated; a wind condition data collection section controlling a sensor provided for the wind turbine generator so that wind conditions of a wind received by the wind turbine generator are measured; and a configuration section. The configuration section updates at least one of a cut-in speed, a rated power output, a rated wind speed range and a control gain, which are included in the control parameters, to a desirable control parameter calculated based on the wind conditions.

## Description

### Technical Field

The present invention relates to a wind turbine generator maintenance apparatus and wind turbine generator maintenance method, more particularly, to a wind turbine generator maintenance apparatus and wind turbine generator maintenance method for performing maintenance of a wind turbine generator.

### Background Art

Wind turbine generators, which convert wind power to electric power, are known in the art. A wind turbine generator is manufactured, having a length of turbine blades designed on the basis of the wind conditions observed before the installation of the wind turbine generator so that electric power is generated with a high efficiency. The wind turbine generator is further controlled on the basis of control parameters configured depending on the wind conditions so as to generate the electric power with a high efficiency. It is desired that the amount of electric power generated by a wind turbine generator and it is also desired that a wind turbine generator is appropriately controlled and maintained.

United States Patent no. 7,569,945 discloses a method of reducing the changing load of components of a wind turbine to lengthen the lifetime of the wind turbine. The disclosed method involves repeatedly collecting and storing load data of the rotor; calculating a load distribution function of the rotor from the load data; obtaining multiple periodic functions from the load distribution function; calculating an operation of wind turbine control means from the obtained multiple periodic functions to reduce the fatiguing load of the components of the wind turbine; and causing the wind turbine control means to perform the calculated operation.

### Citation List

### Patent Literature

[Patent Literature 1] United States Patent No. 7,569,945

### Summary of Invention

An objective of the present invention is to provide a wind turbine generator maintenance apparatus and wind turbine generator maintenance method for increasing the amount of electric power generated by a wind turbine generator.

Another objective of the present invention is to provide a wind turbine generator maintenance apparatus and wind turbine generator maintenance method for performing maintenance of a wind turbine generator more appropriately.

Still another objective of the present invention is to provide a wind turbine generator maintenance apparatus and wind turbine generator maintenance method for controlling a wind turbine generator more appropriately.

Still another objective of the present invention is to provide a wind turbine generator maintenance apparatus and wind turbine generator maintenance method for increasing the amount of electric power generated by a wind turbine generator, while lengthening the lifetime of the wind turbine generator.

In the following, a description is given of means for solving the problem, using numerals in parentheses used in embodiments or implementation examples. The numerals are attached in order to clarify the correspondence of the description in the claims with the description of the embodiments; the numerals should not be used for the interpretation of the scope of the invention set forth in the claims.

A wind turbine generator maintenance apparatus (1) includes: an operation control section (43) controlling a wind turbine generator (8-j) by referring to control parameters (22, 23, 24) used in correlating wind speeds with power outputs so that, when a wind blows at a predetermined wind speed, a predetermined power output corresponding to the predetermined wind speed out of the power outputs is generated; a wind condition data collection section (41, 42, 51) controlling a sensor (19) provided for the wind turbine generator (8-j) so that wind conditions of a wind received by the wind turbine generator (8-j) are measured; and a configuration section (44, 53) updating at least one of a cut-in speed, a rated power output, a rated wind speed range and a control gain, which are included in the control parameters (22, 23, 24), to a desirable control parameter calculated based on the wind conditions. The wind turbine generator maintenance apparatus (1) thus constructed can appropriately modify control parameters (22, 23, 24) of the wind turbine generator (8-j) while the wind turbine generator is at work, and generate power with a higher efficiency compared with other wind turbine generators for which control parameters (22, 23, 24) are not modified; this increases the amount of generated power of the wind turbine generator (8-j).

The configuration section (44, 53) further controls the sensor (19) so that a load imposed on the wind turbine generator (8-j) by the wind is measured. The desirable control parameter is updated so that the load falls in a predetermined load range. The wind turbine generator maintenance apparatus (1) thus constructed can appropriately modify control parameters (22, 23, 24) in response to wind conditions of the wind received by the wind turbine generator (8-j) within a range in which the load imposed on the wind turbine generator (8-j) does not become overload, and generate power with a higher efficiency; this increases the amount of generated power of the wind turbine generator (8-j) and lengthens the lifetime of the wind turbine generator (8-j).

The wind turbine generator maintenance apparatus (1) further includes a weather prediction section (52) collecting weather data of a region where the wind turbine generator (8-j) is located, from a weather information server (6). It is preferable that the desirable control parameter is calculated further based on the weather data.

The operation control section (43) controls the wind turbine generator (8-j) so that the rated power output (23) is generated when the predetermined wind speed is in the rated wind speed range. It is preferable that the rated power output (23) is updated to a desirable rated power output calculated based on said wind conditions. It is preferable that the wind conditions indicate the average wind speed of the wind.

The wind turbine generator maintenance apparatus (1) further includes a blade replacement calculation section (54) controlling an output device to output a desirable blade length calculated based on the wind conditions when a blade length of blades (15) provided for the wind turbine generator (8-j) is different from the desirable blade length. The wind turbine generator maintenance apparatus (1) thus constructed allows an operator to replace blades (15) with other blades with an adequate blade length while the wind turbine generator (8-j) is at work, and enables generating power with a higher efficiency compared with other wind turbine generators whose blades are not replace; this increases the amount of generated power of the wind turbine generator (8-j).

The blade replacement calculation section (54) further refers to a table which correlates a plurality of wind turbine generators (8-1 to 8-m) with a plurality of blade lengths and controls the output device so that a replacement target wind turbine generator corresponding to the desirable blade length out of the plurality of wind turbine generators (8-1 to 8-m) is outputted. The wind turbine generator maintenance apparatus (1) thus constructed eliminates the need for preparing blades (15) of a plurality of blade lengths different from each other for each of the wind turbine generators (8-1 to 8-m); this allow replacing blades (15) at a lower cost.

A wind turbine generator maintenance method according to the present invention includes: controlling a wind turbine generator (8-j) by referring to control parameters (22, 23, 24) used in correlating wind speeds with power outputs so that, when a wind blows at a predetermined wind speed, a predetermined power output corresponding to the predetermined wind speed out of said power outputs is generated; controlling a sensor (19) provided for the wind turbine generator (8-j) so that wind conditions of a wind received by the wind turbine generator (8-j) are measured; and updating at least one of a cut-in speed, a rated power output, a rated wind speed range and a control gain, which are included in the control parameters (22, 23, 24), to a desirable control parameter calculated based on the wind conditions. Such the wind turbine generator maintenance method can appropriately modify control parameters (22, 23, 24) of the wind turbine generator (8-j) while the wind turbine generator is at work, and generate power with a higher efficiency compared with other wind turbine generators for which control parameters (22, 23, 24) are not modified; this increases the amount of generated power of the wind turbine generator (8-j).

The wind turbine generator maintenance method further includes: controlling the sensor (19) so that a load imposed on the wind turbine generator (8-j) by the wind is measured. The desirable control parameter is calculated so that the load falls in a predetermined load range. Such the wind turbine generator maintenance method can appropriately modify control parameters (22, 23, 24) in response to wind conditions of the wind received by the wind turbine generator (8-j) within a range in which the load imposed on the wind turbine generator (8-j) does not become overload, and generate power with a higher efficiency; this increases the amount of generated power of the wind turbine generator (8-j) and lengthens the lifetime of the wind turbine generator (8-j).

The wind turbine generator maintenance method further includes: collecting from a weather information server (6) weather data of a region where the wind turbine generator (8-j) is located. It is preferable that the desirable control parameter is calculated further based on the weather data.

The wind turbine generator (8-j) is controlled so that the rated power output (23) is generated when the predetermined wind speed is in the rated wind speed range. It is preferable that the rated power output (23) is updated to a desirable rated power output calculated based on the wind conditions. It is preferable that the wind conditions indicate an average wind speed of said wind.

The wind turbine generator maintenance method according to the present invention further includes: determining whether a blade length of blades (15) provided for the wind turbine generator (8-j) is different from a desirable blade length calculated based on the wind conditions; and controlling an output device to output the desirable blade length when the blade length is different from the desirable blade length. Such the wind turbine generator maintenance method allows an operator to replace blades (15) with other blades with an adequate blade length while the wind turbine generator (8-j) is at work, and enables generating power with a higher efficiency compared with other wind turbine generators whose blades are not replaced; this increases the amount of generated power of the wind turbine generator (8-j).

The wind turbine generator maintenance further includes: referring to a table which correlates a plurality of wind turbine generators (8-1 to 8-m) with a plurality of blade lengths and controlling the output device so that a replacement target wind turbine generator (8-j) corresponding to the desirable blade length out of the plurality of wind turbine generators (8-1 to 8-m) is outputted. Such the wind turbine generator maintenance method eliminates the need for preparing blades (15) of a plurality of blade lengths different from each other for each of the wind turbine generators (8-1 to 8-m); this allow replacing blades (15) at a lower cost.

A wind turbine generator maintenance apparatus (1) includes: a wind condition data collection section (41, 42, 51) controlling a sensor (19) provided for a wind turbine generator (8-j) so that wind conditions of a wind received by the wind turbine generator (8-j) are measured; and an blade replacement calculation section (54) controlling an output device to output a desirable blade length calculated based on the wind conditions when a blade length of blades provided for the wind turbine generator (8-j) is different from the desirable blade length. The wind turbine generator maintenance apparatus (1) thus constructed allows an operator to replace blades (15) with other blades with an adequate blade length while the wind turbine generator (8-j) is at work, and enables generating power with a higher efficiency compared with other wind turbine generators whose blades are not replace; this increases the amount of generated power of the wind turbine generator (8-j).

A wind turbine generator maintenance method according to the present invention includes: controlling a sensor (19) provided for a wind turbine generator (8-j) so that wind conditions of a wind received by the wind turbine generator (8-j) are measured; determining whether a blade length of blades (15) provided for the wind turbine generator (8-j) is different from a desirable blade length calculated based on the wind conditions; and controlling an output device to output the desirable blade length when the blade length is different from the desirable blade length. Such the wind turbine generator maintenance method allows an operator to replace blades (15) with other blades with an adequate blade length while the wind turbine generator (8-j) is at work, and enables generating power with a higher efficiency compared with other wind turbine generators whose blades are not replaced; this increases the amount of generated power of the wind turbine generator (8-j).

A wind turbine generator maintenance apparatus and wind turbine generator maintenance method according to the present invention can appropriately modify control parameters of the wind turbine generator while the wind turbine generator is at work, and generate power with a higher efficiency compared with other wind turbine generators for which control parameters are not modified; as a result, the amount of generated power of the wind turbine generator can be increased.

### Brief Description of Drawings

Fig. 1 is a block diagram illustrating a wind turbine generator maintenance apparatus according to the present invention;
Fig. 2 is a diagram illustrating a wind turbine generator;
Fig. 3 is a block diagram illustrating a sensor;
Fig.4 is a block diagram illustrating an on-site remote monitoring device;
Fig. 5 is a graph illustrating a power curve;
Fig. 6 is a block diagram illustrating a remote monitoring device;
Fig. 7 is a flowchart illustrating a long-term maintenance operation; and
Fig. 8 is a flowchart illustrating a short-term maintenance operation.

### Description of Embodiments

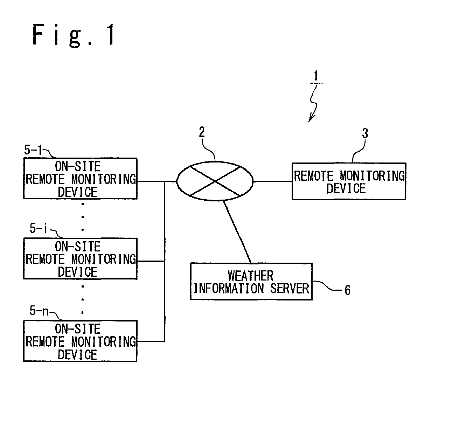

With reference to the drawings, a description is given of embodiments of a wind turbine generator maintenance apparatus according to the present invention. The wind turbine generator maintenance apparatus 1, which is applied to a wind turbine generator system, includes a plurality of computers connected via the internet 2 so as to achieve mutual information communications with each other as shown in Fig. 1. The plurality of computers include a remote monitoring device 3, a plurality of on-site remote monitoring devices 5-1 to 5-n (where n = 2, 3, 4...), and a weather information server 6. It should be noted other communication networks may be used in place of the internet 2. One example of such communication networks is a dedicated line network.

The weather information server 6 contains a plurality of predicted weather data associated with a plurality of time periods and a plurality of regions. A predicted weather data associated with a certain time period and a certain region out of the plurality of predicted weather data indicates an average wind speed of the wind which will blow in the certain region during the certain time period. It should be noted that the predicted weather data may indicate wind conditions other than the average wind speed. One example of the wind conditions is the wind speed distribution of the wind. When receiving a predicted weather data request from a computer connected to the internet 2, the weather information server 6 return to the computer the predicted weather data associated with the time period and region indicated by the predicted weather data request, out of the plurality of predicted weather data.

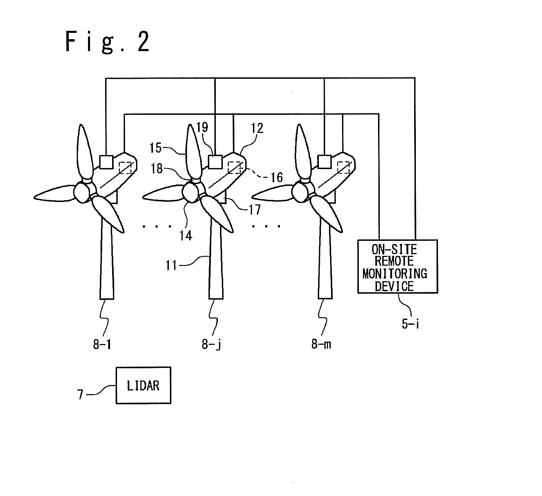

The plurality of on-site remote monitoring devices 5-1 to 5-n are located at locations away from the location where the remote monitoring device 3 is located and provided in a plurality of sites different from each other. As shown in Fig. 2, a LIDAR 7 and a plurality of wind turbine generators 8-1 to 8-m (where m = 2, 3, 4...) are located in the site where every on-site remote monitoring device 5-i (where i = 1, 2, 3... , n) is located out of the plurality of sites. The LIDAR 7 is communicatably connected to the remote monitoring device 3 via the internet 2. The LIDAR 7 measures the wind conditions of the wind blowing at the site under the control of the remote monitoring device 3, and notifies the remote monitoring device 3 of the wind conditions.

Every wind turbine generator 8-j of the plurality of wind turbine generators 8-1 to 8-m includes a tower 11, a nacelle 12, a main shaft 14, a plurality of blades 15, a generator 16, a yaw drive device 17, a pitch drive device 18 and a sensor 19.

The tower 11 is formed in a columnar shape and fixed to a base. The nacelle 12 is positioned at a sufficiently high location and supported by the tower 11 so as to be rotatable around a yaw rotation axis parallel to the vertical direction. The main shaft 14 is supported by the nacelle 12 so as to be rotatable around a rotor rotation axis generally parallel to the horizontal direction. The plurality of blades 15 are respectively arranged along a plurality of pitch rotation axes generally orthogonally intersecting with the rotor rotation axis at a position on the rotor rotation axis. Furthermore, the plurality of blades 15 are arranged at equal intervals around the main shaft 14. Each blade of the plurality of blades 15 is supported by the main shaft 14 so as to be rotatable around the pitch rotation axis along the blade out of the plurality of pitch rotation axis. The plurality of blades 15 rotates the main shaft 14 around the rotor rotation axis on the wind received by the wind turbine generator 8-j, and thereby generates rotational kinetic energy, when fixed to the main shaft 14 at a predetermined pitch angle.

The generator 16 is arranged in the nacelle 12 and communicatably connected to the on-site remote monitoring device 5-i. The generator 16 generates predetermined power from the rotational kinetic energy generated by the plurality of blades 15, under the control of the on-site remote monitoring device 5-i. The yaw drive device 17 rotates the nacelle 12 with respect to the tower 11 around the yaw rotational axis under the control of the on-site remote monitoring device 5-i. The pitch drive device 18 rotates the plurality of blades 15 around the respective pitch rotation axes with respect to the main shaft 14 under the control of the on-site remote monitoring device 5-i.

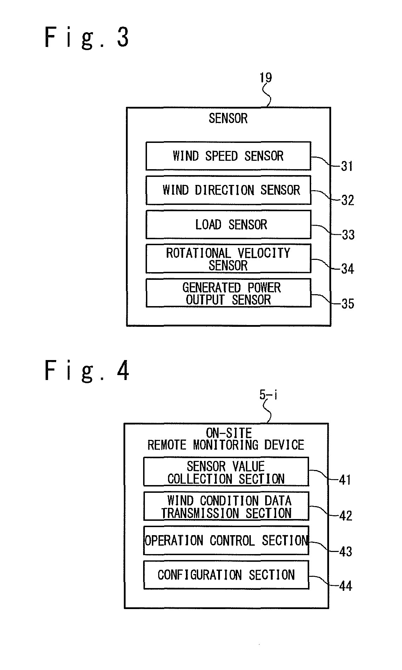

Fig. 3 illustrates the sensor 19. The sensor 19 includes a wind speed sensor 31, a wind direction sensor 32, a load sensor 33, a rotational velocity sensor 34 and a generated power output sensor 35. The wind speed sensor 31 measures the wind speed of the wind received by the wind turbine generator 8-j under the control of the on-site remote monitoring device 5-i and notifies the on-site remote monitoring device 5-i of the wind speed. The wind direction sensor 32 measures the wind direction of the wind received by the wind turbine generator 8-j under the control of the on-site remote monitoring device 5-i and notifies the on-site remote monitoring device 5-i of the wind direction. The load sensor 33 is provided at the root of the plurality of blades 15. The load sensor 33 measures the load imposed on the plurality of blades 15 by the wind received by the wind turbine generator 8-j, under the control of the on-site remote monitoring device 5-i and notifies the on-site remote monitoring device 5-i of the measured load. It should be noted that the load sensor 33 may measure other sensor values other than the load. An example of the sensor value is the load imposed on the tower 11 by the wind received by the wind turbine generator 8-j. The rotational velocity sensor 34 measures the number of rotations per unit time of the plurality of blades 15 caused by the wind received by the wind turbine generator 8-j, under the control of the on-site remote monitoring device 5-i, and notifies the on-site remote monitoring device 5-i of the number of rotations per unit time. The generated power output sensor 35 measures the power generated by the generator 16 on the rotation of the plurality of blades 15 under the control of the on-site remote monitoring device 5-i, and notifies the on-site remote monitoring device 5-i of the generated power.

Fig. 4 illustrates an on-site remote monitoring device 5-i. The on-site remote monitoring device 5-i includes a CPU, a storage device, a communication device, a removable memory drive, an input device, an output device and an interface, which are not shown in the figures. The CPU controls the storage device, the communication device, the removable memory drive, the input device, the output device and the interface by executing computer programs installed on the on-site remote monitoring device 5-i. The storage device stores the computer programs and temporarily stores data generated by the CPU.

The communication device transmits data generated by the CPU to other computers via the internet 2, and outputs data received from other computers via the internet 2 to the CPU. The communication device is also used for downloading computer programs to be installed onto the on-site remote monitoring device 5-i from other computers. The removable memory drive is used to, when a recording medium is inserted thereinto, read data from the recording medium. The removable memory drive is further used to, when a recording medium recording a computer program is inserted thereinto, install the computer program onto the on-site remote monitoring device 5-i. Examples of the recording medium include flash memories, magnetic discs (e.g. flexible discs and hard discs) and optical discs (e.g. CDs and DVDs).

The input device generates data in response to user's operations and outputs the generated data to the CPU. Examples of the input device include key boards, pointing devices and touch panels. The output device outputs data generated by the CPU in a recognizable form to the user.

### Examples of the output device include displays, audio devices and touch panels.

The interface outputs data generated by external devices connected to the on-site remote monitoring device 5-i to the CPU and outputs data generated by the CPU to the external devices. The external devices include the wind speed sensor 31, the wind direction sensor 32, the load sensor 33, the rotational velocity sensor 34 and the generated power output sensor 35.

The computer programs installed on the on-site remote monitoring device 5-i include a plurality of computer programs which cause the on-site remote monitoring device 5-i to provide a plurality of functions, respectively. The plurality of functions include a sensor value collection section 41, a wind condition data transmission section 42, an operation control section 43 and a configuration section 44.

The sensor value collection section 41 collects a plurality of sensor values associated with the plurality of wind turbine generators 8-1 to 8-m from the plurality of wind turbine generators 8-1 to 8-m. The sensor values associated with the wind turbine generator 8-j out of the plurality of sensor values indicate the wind speed measured by the wind speed sensor 31, the wind direction measured by the wind direction sensor 32, the load measured by the load sensor 33, the rotational velocity measured by the rotational velocity sensor 34 and the power measured by the generated power output sensor 35.

In other words, the sensor value collection section 41 controls the wind speed sensor 31 so as to measure the wind speed of the wind received by the wind turbine generator 8-j. The sensor value collection section 41 controls the wind direction sensor 32 so as to measure the wind direction of the wind received by the wind turbine generator 8-j. The sensor value collection section 41 controls the load sensor 33 so as to measure the load imposed on the plurality of blades 15 by the wind received by the wind turbine generator 8-j. The sensor value collection section 41 controls the rotational velocity sensor 34 so as to measure the number of rotations per unit time of the plurality of blades 15. The sensor value collection section 41 controls the generated power output sensor 35 so as to measure the power generated by the generator 16.

The wind condition data transmission section 42 generates wind condition data on the basis of the plurality of sensor values collected by the sensor value collection section 41, and transmits the wind condition data to the remote monitoring device 3 via the internet 2. The wind condition data indicate a plurality of wind speeds associated with a plurality of dates and times and the plurality of wind turbine generators 8-1 to 8-m. The wind speed associated with a certain date and time and the wind turbine generator 8-j out of the plurality of wind speeds indicates the wind speed measured by the wind speed sensor 31 at the certain date and time.

The operation control section 43 controls the plurality of wind turbine generators 8-1 to 8-m on the basis of the sensor values collected by the sensor value collection section 41. Specifically, the operation control section 43 controls the yaw drive device 17 on the basis of the wind direction measured by the wind direction sensor 32 so that the plurality of blades 15 are positioned upwind of the nacelle 12 and the rotor rotation axis is directed in parallel to the wind direction. Furthermore, the operation control section 43 holds a plurality of control parameters associated with the plurality of wind turbine generators 8-1 to 8-m. The operation control section 43 controls the generator 16 and the pitch drive device 18 on the basis of the control parameters associated with the wind turbine generator 8-j out of the plurality of control parameters and the wind speed measured by the wind speed sensor 31, so that the power generated by the generator 16 is equal to a predetermined power.

When receiving a plurality of configuration data associated with the plurality of wind turbine generators 8-1 to 8-m from the remote monitoring device 3, the configuration section 44 updates the plurality of control parameters held by the operation control section 43 on the basis of the plurality of configuration data. Furthermore, the configuration section 44 notifies the remote monitoring device 3 of the load collected by the sensor value collection section 41 via the internet 2.

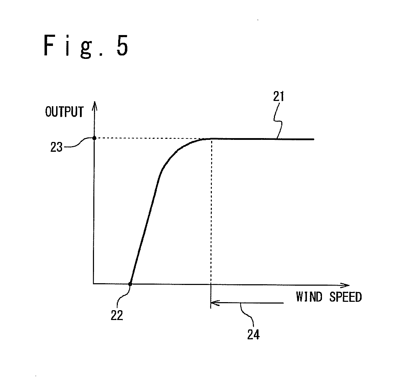

Fig. 5 illustrates a power curve determined by the control parameters associated with the wind turbine generator 8-j, out of the plurality of control parameters held by the operation control section 43. The power curve 21 correlates a plurality of wind speeds with a plurality of power outputs, indicating the relation between the wind speed of the wind received by the wind turbine generator 8-j and the power to be generated by the generator 16. The control parameters indicate a cut-in wind speed 22, a rated power output 23, a rated wind speed range 24 and a control gain. The power curve 21 represents that the power monotonously increases as the wind speed increases. The power curve 21 indicates that no power is generated when the wind speed is smaller than the cut-in wind speed 22. The power curve 21 further indicates that the power is equal to the rated power output 23 when the wind speed is included in the rated wind speed range 24. Furthermore, the power curve 21 indicates that the power increases with a predetermined gradient as the wind speed increases, when the wind speed is larger than the cut-in wind speed 22 and smaller than the rated wind speed range 24. The gradient is a function which monotonously increases as the control gain increases.

Here, the operation control section 43 controls the generator 16 and the pitch drive device 18 on the basis of the control parameters associated with the wind turbine generator 8-j out of the plurality of control parameters. In the wind turbine generator 8-j, when a certain wind speed is measured by the wind speed sensor 31, the power equal to the power output associated with the wind speed by the power curve 21 is generated by the generator 16 due to the above-described control.

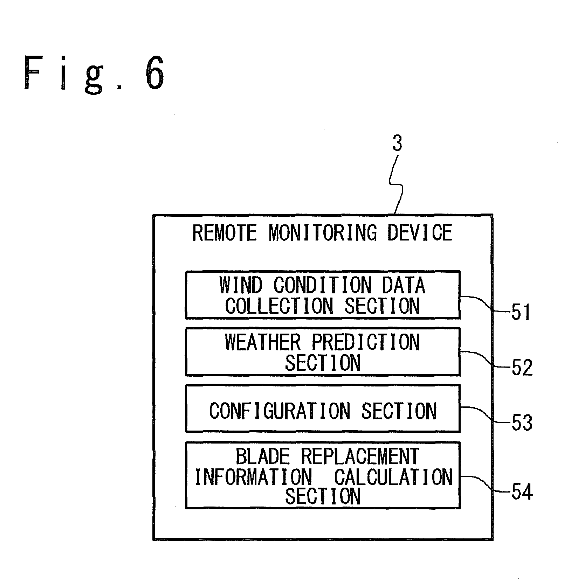

Fig. 6 illustrates the remote monitoring device 3. The remote monitoring device 3 includes a CPU, a storage device, a communication device, a removable memory drive, an input device and an output device, which are not shown in the figures. The CPU controls the storage device, the communication device, the removable memory drive, the input device, the output device and an interface by executing computer programs installed on the remote monitoring device 3. The storage device stores the computer programs and temporarily stores data generated by the CPU.

The communication device transmits data generated by the CPU to other computers via the internet 2, and outputs data received from other computers via the internet 2 to the CPU. The communication device is also used for downloading computer programs to be installed onto the remote monitoring device 3 from other computers. The removable memory drive is used to, when a recording medium is inserted thereinto, read data from the recording medium. The removable memory drive is further used to, when a recording medium recording a computer program is inserted thereinto, install the computer program onto the remote monitoring device 3. Examples of the recording medium include flash memories, magnetic discs (e.g. flexible discs and hard discs) and optical discs (e.g. CDs and DVDs).

The input device generates data in response to user's operations and outputs the generated data to the CPU. Examples of the input device include key boards, pointing devices and touch panels. The output device outputs data generated by the CPU in a recognizable form to the user. Examples of the output device include displays, audio devices and touch panels.

The computer programs installed on the remote monitoring device 3 include a plurality of computer programs which cause the remote monitoring device 3 to provide a plurality of functions, respectively. The plurality of functions include a wind condition data collection section 51, a weather prediction section 52 and a configuration section 53.

The wind condition data collection section 51 collects a plurality of wind condition data from the plurality of on-site remote monitoring devices 5-1 to 5-n via the internet 2. The wind condition data transmitted from the on-site remote monitoring device 5-i out of the plurality of wind condition data is identical to the wind condition data generated by the wind data transmission section 42 of the on-site remote monitoring device 5-i and indicative of a plurality of wind speeds associated with a plurality of dates and times and the plurality of the wind turbine generates 8-1 to 8-m. The wind speed associated with a certain date and time and the wind turbine generator 8-j out of the plurality of wind speeds indicates the wind speed measured by the wind speed sensor 31 at the certain date and time.

The weather prediction section 52 generates a plurality of predicted weather data requests associated with the plurality of sites and transmits the plurality of predicted weather data requests to the weather information server 6 via the internet 2. The predicted weather data request associated with the site of the on-site remote monitoring device 5-i out of the plurality of predicted weather data requests indicates a time period inputted by using the input device of the remote monitoring device 3 and the region where the site is located. The weather prediction section 52 further collects a plurality of predicted weather data associated with the plurality of predicted weather data requests from the weather information server 6. The weather prediction section 52 calculates a plurality of predicted average wind speeds associated with the plurality of wind turbine generators on the basis of the plurality of wind condition data collected by the wind condition data collection section 51, the plurality of predicted weather data collected by the weather prediction section 52 and the specified time period inputted via the input device. The predicted average wind speed associated with the wind turbine generator 8-j out of the plurality of predicted average wind speeds indicates the average of the wind speed received by the wind turbine generator 8-j during the specified time period.

The configuration section 53 calculates a plurality of configuration data associated with the plurality of wind turbine generators on the basis of the plurality of predicted average wind speeds calculated by the weather prediction section 52. The configuration data associated with the wind turbine generator 8-j out of the plurality of configuration data indicates the specified time period and desirable control parameters. The desirable control parameters indicate a desirable rated power output and a desirable control gain. The configuration data are calculated so that the wind turbine generator 8-j can generate power at a high efficiency when the wind turbine generator 8-j is controlled by using the desirable rated power output and the desirable control gain. Specifically, the desirable rated power output is set to a value larger than the rated power output 23 when the predicted average wind speed associated with the wind power generator 8-j out of the plurality of predicted average wind speeds is larger than an assumed average wind speed. The assumed average speed is the average wind speed of the wind received by the wind turbine generator 8-j, which is assumed in the calculation of the control parameters of the wind turbine generator 8-j. The desirable rated power output is set to a value smaller than the rated power output 23 when the predicted average wind speed is smaller than the assumed average wind speed. The desirable control gain is set to a value larger than the control gain used in the calculation of the power curve 21 when the predicted average wind speed is larger than the assumed average wind speed. The desirable control gain is set to a value smaller than that control gain when the predicted average wind speed is smaller than the assumed average wind speed.

The configuration section 53 further transmits the configuration data associated with the wind turbine generator 8-j out of the plurality of configuration data to the on-site remote monitoring device 5-i associated with the site where the wind turbine generator 8-j is located. When receiving the configuration data associated with the wind turbine generator 8-j from the remote monitoring device 3, the configuration section 44 of the on-site remote monitoring device 5-i updates the control parameters associated with the wind turbine generator 8-j out of the plurality of control parameters, so that, during the specified time period indicated by the configuration data, the rated power output 23 indicates the desirable rated power output and the control gain indicates the desirable control gain.

The blade replacement information calculation section 54 calculates a plurality of desirable blade lengths associated with the plurality of wind turbine generators, on the basis of the plurality of predicted average wind speeds calculated by the weather prediction section 52. The desirable blade length associated with the wind turbine generator 8-j out of the plurality of desirable blade lengths is calculated so that the wind turbine generator 8-j can generate power at a higher efficiency during the specified time period, when the blade length of the plurality of blades 15 of the wind turbine generator 8-j is equal to the desirable blade length. When the blade length of the plurality of blades 15 currently installed to the wind turbine generator 8-j is different from the desirable blade length, the blade replacement information calculation section 54 controls the output device of the remote monitoring device 3 so as to display a message inviting installation of blades of the desirable blade length to the wind turbine generator 8-j.

The blade replacement information calculation section 54 contains a table which correlates the plurality of wind turbine generators with a plurality of blade lengths and a plurality of locations. The blade length associated with the wind turbine generator 8-j out of the plurality of blade lengths indicates the blade length of the plurality of blades 15 provided for the wind turbine generator 8-j. The location associated with the wind turbine generator 8-j out of the plurality of locations indicates the location where the wind turbine generator 8-j is located. When the blade length of the plurality of blades 15 is different from the desirable blade length, the blade replacement information calculation section 54 refers the table to extract a plurality of wind turbine generators associated with the desired blade length out of the plurality of the wind turbine generators. The blade replacement information calculation section 54 further extracts a plurality of wind turbine generators whose blade length is not adequate from the plurality of extracted wind turbine generators. The blade replacement information calculation section 54 selects one wind turbine generator located closest to the wind turbine generator 8-j out of the extracted wind turbine generators. The blade replacement information calculation section 54 controls the output device of the remote monitoring device 3 so as to display a message inviting installation of the plurality of blades of the selected wind turbine generator to the wind turbine generator 8-j.

An embodiment of a wind turbine generator maintenance method according to the present invention is implemented by using the wind turbine generator maintenance apparatus 1 and involves an operation control operation, a long-term maintenance operation, a short-term maintenance operation and a blade replacement operation.

The operation control operation is continuously implemented by the plurality of on-site remote monitoring devices 5-1 to 5-n. The on-site remote monitoring device 5-i controls the wind direction sensor 32 and thereby measures the wind direction of the wind received by the wind turbine generator 8-j at a sufficiently short sampling period. The on-site remote monitoring device 5-i controls the yaw drive device 17 to rotate the nacelle 12 around the yaw rotation axis with respect to the tower 11, so that the plurality of blades 15 are positioned upwind of the nacelle 12 and the rotor rotation axis is directed in parallel to the wind direction.

The on-site remote monitoring device 5-i further controls the wind speed sensor 31 and thereby measures the wind speed of the wind received by the wind turbine generator 8-j at a sufficiently-short sampling period. The on-site remote monitoring device 5-i causes the generator 16 to generate power equal to the power output corresponding to the wind speed as indicated by the power curve 21, by controlling the generator 16 and the pitch drive device 18 on the basis of the control parameters set to the wind turbine generator 8-j.

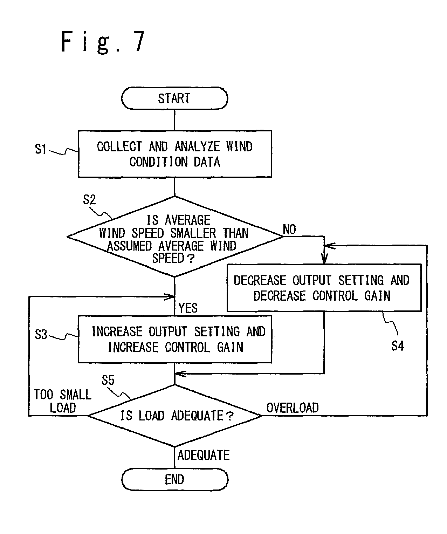

Fig. 7 illustrates the long-term maintenance operation. The long-term maintenance operation is implemented by the wind turbine generator maintenance apparatus 1 at a predetermined timing. The timing may be, for example, every year or every season. An operator inputs a specified time period into the remote monitoring device 3 via the input device. The specified time period indicates the period from the current date and time to the date and time when the long-term maintenance operation will be next implemented. The remote monitoring device 3 collects a plurality of wind condition data from the plurality of on-site remote monitoring device 5-1 to 5-n. The wind condition data transmitted from the on-site remote monitoring device 5-i out of the plurality of wind condition data indicates a plurality of wind speeds associated with a plurality of dates and times and the plurality of wind turbine generators 8-1 to 8-m. The wind speed associated with a certain date and time and the wind turbine generator 8-j out of the plurality of wind speeds indicates the wind speed measured by the wind speed sensor 31 at the certain date and time.

The remote monitoring device 3 generates a plurality of predicted weather data requests associated with the plurality of sites, and transmits the plurality of the predicted weather data requests to the weather information server 6 via the internet 2. The predicted weather data request associated with the site of the on-site remote monitoring device 5-i out of the plurality of predicted weather data requests indicates the specified time period and the region where the site is located. The remote monitoring device 3 further collects a plurality of predicted weather data associated with the plurality of predicted weather data requests from the weather information server 6.

On the basis of the specified period, the plurality of wind condition data collected from the plurality of on-site remote monitoring device 5-1 to 5-n and the plurality of predicted weather data collected from the weather information server 6, the remote monitoring device 3 calculates a plurality of predicted average wind speed associated with the plurality of wind turbine generators (step S1). The predicted average wind speed associated with the wind turbine generator 8-j out of the plurality of predicted average wind speeds indicates the average of the wind speed of the wind received by the wind turbine generator 8-j during the specified time period. The remote monitoring device 3 determines whether the predicted average wind speed is smaller than the assumed average wind speed which has been assumed in the calculation of the control parameters currently set to the wind turbine generator 8-j (step S2).

When the predicted average wind speed is smaller than the assumed average wind speed (step S2, YES), the remote monitoring device 3 sets the desirable rated power output to a value larger than the rated power output 23 currently set to the wind turbine generator 8-j, and sets the desirable control gain to a value larger than the control gain currently set to the wind turbine generator 8-j (step S3). The remote monitoring device 3 transmits to the on-site remote monitoring device 5-i configuration data indicating the specified time period, the desirable rated power output and the control gain with the configuration data correlated with the wind turbine generator 8-j. When receiving the configuration data from the remote monitoring device 3, the on-site remote monitoring device 5-i updates the control parameters associated with the wind turbine generator 8-j so that, during the specified time period, the rated power output is set to the desirable rated power output and the control gain is set to the desirable control gain.

When the predicted average wind speed is larger than the assumed average wind speed (step S2, No), the remote monitoring device 3 sets the desirable rated power output to a value smaller than the rated power output currently set to the wind turbine generator 8-j and sets the desirable control gain to a value smaller than the control gain currently set to the wind turbine generator 8-j (step S4). The remote monitoring device 3 transmits to the on-site remote monitoring device 5-i configuration data indicating the specified time period, the desirable rated power output and the control gain with the configuration data correlated with the wind turbine generator 8-j. When receiving the configuration data from the remote monitoring device 3, the on-site remote monitoring device 5-i updates the control parameters associated with the wind turbine generator 8-j so that, during the specified time period, the rated power output is set to the desirable rated power output and the control gain is set to the desirable control gain.

After setting the desirable rated power output and the desirable control gain to the wind turbine generator 8-j, that is, in the specified time period, the remote monitoring device 3 collects the load measured by the load sensor 33 from the on-site remote monitoring device 5-i. The remote monitoring device 3 determines whether the load is in a predetermined load range (step S5).

When the load is smaller than the load range (step S5, too small load), the remote monitoring device 3 sets the desirable rated power output to a value larger than the rated power output 23 currently set to the wind turbine generator 8-j, and sets the desirable control gain to a value larger than the control gain currently set to the wind turbine generator 8-j (step S3). The remote monitoring device 3 transmits to the on-site remote monitoring device 5-i configuration data indicating the specified time period, the desirable rated power output and the control gain with the configuration data correlated with the wind turbine generator 8-j. When receiving the configuration data from the remote monitoring device 3, the on-site remote monitoring device 5-i updates the control parameters associated with the wind turbine generator 8-j so that, during the specified time period, the rated power output is set to the desirable rated power output and the control gain is set to the desirable control gain.

When the load is larger than the load range (step S5, overload), the remote monitoring device 3 sets the desirable rated power output to a value smaller than the rated power output currently set to the wind turbine generator 8-j and sets the desirable control gain to a value smaller than the control gain currently set to the wind turbine generator 8-j (step S4). The remote monitoring device 3 transmits to the on-site remote monitoring device 5-i configuration data indicating the specified time period, the desirable rated power output and the control gain with the configuration data correlated with the wind turbine generator 8-j. When receiving the configuration data from the remote monitoring device 3, the on-site remote monitoring device 5-i updates the control parameters associated with the wind turbine generator 8-j so that, during the specified time period, the rated power output is set to the desirable rated power output and the control gain is set to the desirable control gain.

The remote monitoring device 3 repeatedly performs steps S3, S4 and S5 until the load falls in the load range (step S5, adequate).

The above-described long-term maintenance operation, in which the controller parameters of the wind turbine generator 8-j are adequately modified on the basis of the wind conditions while the wind turbine generator 8-j is at work, allows generating power at a higher efficiency compared with other wind turbine generator maintenance apparatuses which do not modify control parameters while the wind turbine generator 8-j is at work; this increases the amount of the generated power of the wind turbine generator 8-j.

It should be noted that the remote monitoring device 3 may calculate the plurality of predicted average wind speeds without using the plurality of predicted weather data collected from the weather information server 6. Also in this case, the long-term maintenance operation allows generating power at a higher efficiency in the same manner, compared with other wind turbine generator maintenance apparatuses which do not modify control parameters while the wind turbine generator 8-j is at work, increasing the amount of the generated power of the wind turbine generator 8-j.

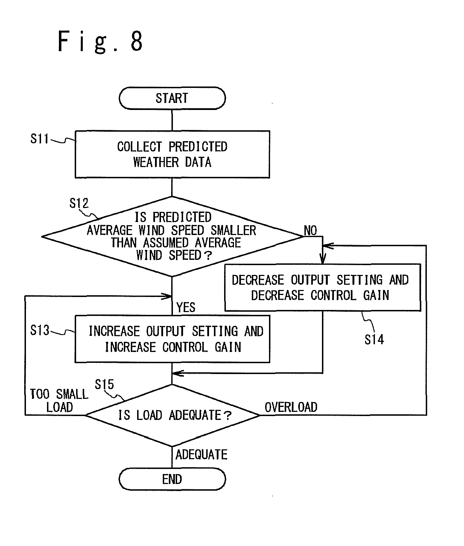

Fig. 8 illustrates the short-term maintenance operation. The short-term maintenance operation is implemented by the wind turbine generator maintenance apparatus 1 at time intervals shorter than the time intervals at which the long-term maintenance operation is implemented. The time intervals may be one day, for example. The operator inputs a specified time period into the remote monitoring device 3 via the input device. The specified time period indicates the period from the current date and time to the date and time when the short-term maintenance operation will be next implemented.

The remote monitoring device 3 generates a plurality of predicted weather data requests associated with the plurality of sites, and transmits the plurality of the predicted weather data requests to the weather information server 6 via the internet 2. The predicted weather data request associated with the site of the on-site remote monitoring device 5-i out of the plurality of predicted weather data requests indicates the specified time period and the region where the site is located. The remote monitoring device 3 further collects a plurality of predicted weather data associated with the plurality of predicted weather data requests from the weather information server 6. The remote monitoring device 3 calculates a plurality of predicted average wind speeds associated with the plurality of wind turbine generators on the basis of the plurality of predicted weather data (step S11).

The predicted average wind speed associated with the wind turbine generator 8-j out of the plurality of predicted average wind speeds indicates the average of the wind speed of the wind received by the wind turbine generator 8-j during the specified time period. The remote monitoring device 3 determines whether the predicted average wind speed is smaller than the assumed average wind speed which has been assumed in the calculation of the control parameters currently set to the wind turbine generator 8-j (step S12).

When the predicted average wind speed is smaller than the assumed average wind speed (step S12, YES), the remote monitoring device 3 sets the desirable rated power output to a value larger than the rated power output 23 currently set to the wind turbine generator 8-j, and sets the desirable control gain to a value larger than the control gain currently set to the wind turbine generator 8-j (step S13). The remote monitoring device 3 transmits to the on-site remote monitoring device 5-i configuration data indicating the specified time period, the desirable rated power output and the control gain with the configuration data correlated with the wind turbine generator 8-j. When receiving the configuration data from the remote monitoring device 3, the on-site remote monitoring device 5-i updates the control parameters associated with the wind turbine generator 8-j so that, during the specified time period, the rated power output is set to the desirable rated power output and the control gain is set to the desirable control gain.

When the predicted average wind speed is larger than the assumed average wind speed (step S12, No), the remote monitoring device 3 sets the desirable rated power output to a value smaller than the rated power output currently set to the wind turbine generator 8-j and sets the desirable control gain to a value smaller than the control gain currently set to the wind turbine generator 8-j (step S14). The remote monitoring device 3 transmits to the on-site remote monitoring device 5-i configuration data indicating the specified time period, the desirable rated power output and the control gain with the configuration data correlated with the wind turbine generator 8-j. When receiving the configuration data from the remote monitoring device 3, the on-site remote monitoring device 5-i updates the control parameters associated with the wind turbine generator 8-j so that, during the specified time period, the rated power output is set to the desirable rated power output and the control gain is set to the desirable control gain.

After setting the desirable rated power output and the desirable control gain to the wind turbine generator 8-j, that is, in the specified time period, the remote monitoring device 3 collects the load measured by the load sensor 33 from the on-site remote monitoring device 5-i. The remote monitoring device 3 determines whether the load is in a predetermined load range (step S15).

When the load is smaller than the load range (step S15, too small load), the remote monitoring device 3 sets the desirable rated power output to a value larger than the rated power output 23 currently set to the wind turbine generator 8-j, and sets the desirable control gain to a value larger than the control gain currently set to the wind turbine generator 8-j (step S13). The remote monitoring device 3 transmits to the on-site remote monitoring device 5-i configuration data indicating the specified time period, the desirable rated power output and the control gain with the configuration data correlated with the wind turbine generator 8-j. When receiving the configuration data from the remote monitoring device 3, the on-site remote monitoring device 5-i updates the control parameters associated with the wind turbine generator 8-j so that, during the specified time period, the rated power output is set to the desirable rated power output and the control gain is set to the desirable control gain.

When the load is larger than the load range (step S15, overload), the remote monitoring device 3 sets the desirable rated power output to a value smaller than the rated power output currently set to the wind turbine generator 8-j and sets the desirable control gain to a value smaller than the control gain currently set to the wind turbine generator 8-j (step S14). The remote monitoring device 3 transmits to the on-site remote monitoring device 5-i configuration data indicating the specified time period, the desirable rated power output and the control gain with the configuration data correlated with the wind turbine generator 8-j. When receiving the configuration data from the remote monitoring device 3, the on-site remote monitoring device 5-i updates the control parameters associated with the wind turbine generator 8-j so that, during the specified time period, the rated power output is set to the desirable rated power output and the control gain is set to the desirable control gain.

The remote monitoring device 3 repeatedly performs steps S13, S14 and S15 until the load falls in the load range (step S15, adequate).

The above-described short-term maintenance operation, in which the controller parameters of the wind turbine generator 8-j are adequately modified on the basis of the wind conditions while the wind turbine generator 8-j is at work, allows generating power at a higher efficiency compared with other wind turbine generator maintenance apparatuses which do not modify control parameters while the wind turbine generator 8-j is at work; this increases the amount of the generated power of the wind turbine generator 8-j.

It should be noted that the remote monitoring device 3 may calculate the plurality of predicted average wind speeds further on the basis of the plurality of predicted weather data collected from the weather information server 6. Also in this case, the short-term maintenance operation allows generating power at a higher efficiency in the same manner, compared with other wind turbine generator maintenance apparatuses which do not modify control parameters while the wind turbine generator 8-j is at work, increasing the amount of the generated power of the wind turbine generator 8-j.

The blade replacement operation is implemented by the wind turbine generator maintenance apparatus 1 at a predetermine timing. Examples of the timing include the timing when the long-term maintenance operation is implemented and the timing when a scheduled inspection of the wind turbine generator 8-j is implemented. The remote monitoring device 3 calculates a plurality of desirable blade lengths associated with the plurality of wind turbine generators on the basis of the plurality of predicted average wind speeds calculated by the weather prediction section 52. The desirable blade length associated with the wind turbine generator 8-j out of the plurality of desirable blade lengths is calculated so that the wind turbine generator 8-j can generate power at a high efficiency, when the average wind speed of the wind received by the wind turbine generator 8-j is equal to the predicted average speed associated with the wind turbine generator 8-j out of the plurality of predicted average speeds and the blade length of the plurality of blades 15 of the wind turbine generator 8-j is equal to the desirable blade length. When the blade length of the plurality of blades 15 currently installed to the wind turbine generator 8-j is different from that desirable blade length, the remote monitoring device 3 displays an message to invite installation of blades of the desirable blade length to the wind turbine generator 8-j on the output device thereof by controlling the output device.

When the blade length of the plurality of blades 15 currently installed to the wind turbine generator 8-j is different from that desirable blade length, the remote monitoring device 3 further refers to the table which correlates the plurality of wind turbine generators with the plurality of blade lengths and the plurality of locations to extract a plurality of wind turbine generators correlated with the desirable blade length from the plurality of wind turbine generators. The remote monitoring device 3 further extracts a plurality of wind turbine generators whose blade length is inadequate, from the plurality of extracted wind turbine generators. The remote monitoring device 3 selects the wind turbine generator located closest to the wind turbine generator 8-j from the extracted wind turbine generators. The remote monitoring device 3 displays a message to invite installation of the plurality of blades of the selected wind turbine generator to the wind turbine generator 8-j on the output device thereof by controlling the output device. The operator, who has assessed to the message, installs the plurality of blades of the selected wind turbine generator to the wind turbine generator 8-j.

The above-described blade replacement operation allows replacing the plurality of blades 15 of the wind turbine generator 8-j with blades with an adequate blade length on the basis of the wind conditions while the wind turbine generator 8-j is at work, and allows generating power at a higher efficiency compared with other wind turbine generators for which blades are not replaced while they are at work; this allows increasing the amount of generated power of the wind turbine generator 8-j.

The replacement of the plurality of blades 15 of the wind turbine generator 8-j with a plurality of blades provided for another wind turbine generator other than the wind turbine generator 8-j eliminates the need for storing a plurality of blades with different blade lengths for each of the plurality of wind turbine generators, allowing the replacement of the plurality of blades 15 at a lower cast. The replacement of the plurality of blades 15 of the wind turbine generator 8-j with a plurality of blades provided for another wind turbine generator near the wind turbine generator 8-j can reduce the cost for transporting the plurality of blades, allowing the replacement of the plurality of blades 15 at a lower cast.

It should be noted that the plurality of blades 15 of the wind turbine generator 8-j may be replaced with a plurality of blades stored in a warehouse or the like. Such wind turbine generator maintenance method also allows replacing the plurality of blades 15 with blades with an adequate blade length on the basis of the wind condition while the wind turbine generator 8-j is at work, increasing the amount of the generated power of the wind turbine generator 8-j.

It should be noted that the desirable control parameters in the long-term maintenance operation and the short-term maintenance operation may be other desirable control parameters which are not used to update the rated power output 23 or the control gain, out of the control parameters. An example of such desirable control parameter is a desirable control parameter which is used to update at least one of the cut-in wind speed 22, the rated power output 23, the rated wind speed range 24 and the control gain. Also in the case when such desirable control parameter is used, the long-term maintenance operation and the short-term maintenance operation can increase the amount of the generated power of the wind turbine generator 8-j in the same manner as the long-term maintenance operation and the short-term maintenance operation presented in the above-described embodiments.

It should be noted that a wind speed measured by another sensor may be used in place of the wind speed measured by the wind speed sensor 31. Examples of such wind speed include the wind speed measured by the LIDAR 7, the wind speed calculated from the pitch angle of the plurality of blades 15, the rotational velocity measured by the rotational velocity sensor 34 and the generated power output measured by the generated power output sensor 35. Also in the case when such wind speed is used, the wind turbine generator maintenance method according to the present invention can increase the amount of the generated power of the wind turbine generator 8-j in the same manner as the wind turbine generator maintenance method presented in the above-described embodiments.

It should be noted that the predicted weather data provided by the weather information server 6 may indicate weather data other than the average wind speed of the wind which blows in a predetermined region during a predetermined time period. An example of such weather data includes a meteorological chart. In this case, the remote monitoring device 3 calculates the plurality of predicted average wind speeds on the basis of the weather data. Also in the case when such predicted weather data are used, the wind turbine generator maintenance method according to the present invention can increase the amount of the generated power of the wind turbine generator 8-j in the same manner as the wind turbine generator maintenance method presented in the above-described embodiments.

It should be noted that other predicted wind conditions may be used in place of the predicted average wind speed in the wind turbine generator maintenance method according to the present invention. An example of such predicted wind conditions is a predicted wind speed distribution which is the distribution of the wind speed of the wind received by the wind turbine generator 8-j during the specified time period. Also in the case when such predicted wind conditions are used, the wind turbine generator maintenance method according to the present invention can increase the amount of the generated power of the wind turbine generator 8-j in the same manner as the wind turbine generator maintenance method presented in the above-described embodiments.

It should be noted that it is unnecessary to implement all of the long-term maintenance operation, the short-term maintenance operation and the blade replacement operation in the wind turbine generator maintenance method; the amount of generated power of the wind turbine generator 8-j can be increased by implementing at least one of these operations.

### Explanation of Reference Numerals

- 1:: wind turbine generator maintenance apparatus
- 2:: internet
- 3:: remote monitoring device
- 5-1 to 5-n:: a plurality of on-site remote monitoring device
- 6:: weather information server
- 7:: LIDAR
- 8-1 to 8-m:: a plurality of wind turbine generators
- 11:: tower
- 12:: nacelle
- 14:: main shaft
- 15:: a plurality of blades
- 16:: generator
- 17:: yaw drive device
- 18:: pitch drive device
- 19:: sensor
- 21:: power curve
- 22:: cut-in wind speed
- 23:: rated power output
- 24:: rated wind speed range
- 31:: wind speed sensor
- 32:: wind direction sensor
- 33:: load sensor
- 34:: rotational velocity sensor
- 35:: generated power output sensor
- 41:: sensor value collection section
- 42:: wind condition data transmission section
- 43:: operation control section
- 44:: configuration section
- 51:: wind condition data collection section
- 52:: weather prediction section
- 53:: configuration section
- 54:: blade replacement information calculation section

## Claims

1. A wind turbine generator maintenance apparatus, comprising:
an operation control section controlling a wind turbine generator by referring to control parameters used in correlating wind speeds with power outputs so that, when a wind blows at a predetermined wind speed, a predetermined power output corresponding to said predetermined wind speed out of said power outputs is generated;
a wind condition data collection section controlling a sensor provided for said wind turbine generator so that wind conditions of a wind received by said wind turbine generator are measured; and
a configuration section updating at least one of a cut-in speed, a rated power output, a rated wind speed range and a control gain, which are included in said control parameters, to a desirable control parameter calculated based on said wind conditions.

2. The wind turbine generator maintenance apparatus according to claim 1, wherein said configuration section further controls said sensor so that a load imposed on said wind turbine generator by said wind is measured, and
wherein said desirable control parameter is updated so that said load falls in a predetermined load range.

3. The wind turbine generator maintenance apparatus according to claim 1 or 2, further comprising:
a weather prediction section collecting weather data of a region where said wind turbine generator is located, from a weather information server,
wherein said desirable control parameter is calculated further based on said weather data.

4. The wind turbine generator maintenance apparatus according to any one of claims 1 to 3, wherein said operation control section controls said wind turbine generator so that the rated power output is generated when said predetermined wind speed is in the rated wind speed range, and
wherein said rated power output is updated to a desirable rated power output calculated based on said wind conditions.

5. The wind turbine generator maintenance apparatus according to any one of claims 1 to 4, wherein said wind conditions indicate an average wind speed of said wind.

6. The wind turbine generator maintenance apparatus according to any one of claims 1 to 5, further comprising:
a blade replacement calculation section controlling an output device to output a desirable blade length calculated based on said wind conditions when a blade length of blades provided for said wind turbine generator is different from said desirable blade length.

7. The wind turbine generator maintenance apparatus according to claim 6, wherein said blade replacement calculation section further refers to a table which correlates a plurality of wind turbine generators with a plurality of blade lengths and controls said output device so that a replacement target wind turbine generator corresponding to said desirable blade length out of said plurality of wind turbine generators is outputted.

8. A wind turbine generator maintenance method, comprising:
controlling a wind turbine generator by referring to control parameters used in correlating wind speeds with power outputs so that, when a wind blows at a predetermined wind speed, a predetermined power output corresponding to said predetermined wind speed out of said power outputs is generated;
controlling a sensor provided for said wind turbine generator so that wind conditions of a wind received by said wind turbine generator are measured; and
updating at least one of a cut-in speed, a rated power output, a rated wind speed range and a control gain, which are included in said control parameters, to a desirable control parameter calculated based on said wind conditions.

9. The wind turbine generator maintenance method according to claim 8, further comprising:
controlling said sensor so that a load imposed on said wind turbine generator by said wind is measured,
wherein said desirable control parameter is calculated so that said load falls in a predetermined load range.

10. The wind turbine generator maintenance method according to claim 8 or 9, further comprising:
collecting from a weather information server weather data of a region where said wind turbine generator is located,
wherein said desirable control parameter is calculated further based on said weather data.

11. The wind turbine generator maintenance method according to any one of claims 8 to 10,
wherein said wind turbine generator is controlled so that the rated power output is generated when said predetermined wind speed is in the rated wind speed range, and
wherein said rated power output is updated to a desirable rated power output calculated based on said wind conditions.

12. The wind turbine generator maintenance method according to any one of claims 8 to 11, wherein said wind conditions indicate an average wind speed of said wind.

13. The wind turbine generator maintenance method according to any one of claims 8 to 12, further comprising:
determining whether a blade length of blades provided for said wind turbine generator is different from a desirable blade length calculated based on said wind conditions; and
controlling an output device to output said desirable blade length when said blade length is different from said desirable blade length.

14. The wind turbine generator maintenance method according to claim 13, further comprising:
referring to a table which correlates a plurality of wind turbine generators with a plurality of blade lengths and controlling said output device so that a replacement target wind turbine generator corresponding to said desirable blade length out of said plurality of wind turbine generators is outputted.

15. A wind turbine generator maintenance apparatus, comprising:
a wind condition data collection section controlling a sensor provided for a wind turbine generator so that wind conditions of a wind received by said wind turbine generator are measured; and
a blade replacement calculation section controlling an output device to output a desirable blade length calculated based on said wind conditions when a blade length of blades provided for said wind turbine generator is different from said desirable blade length.

16. A wind turbine generator maintenance method, comprising:
controlling a sensor provided for a wind turbine generator so that wind conditions of a wind received by said wind turbine generator are measured;
determining whether a blade length of blades provided for said wind turbine generator is different from a desirable blade length calculated based on said wind conditions; and
controlling an output device to output said desirable blade length when said blade length is different from said desirable blade length.
